# EUROPÄISCHE PATENTSCHRIFT

(11) **EP 3 031 193 B1**
(45) Veröffentlichungstag und Bekanntmachung des Hinweises auf die Patenterteilung: **15.02.2017**
(21) Anmeldenummer: 14808502.0
(22) Anmeldetag: 01.12.2014
(51) Int. Cl.: H04L 29/06, H04L 12/857

(54) **VERFAHREN, COMPUTERPROGRAMMPRODUKT, MASCHINENLESBARER DATENTRÄGER UND TELEKOMMUNIKATIONSANORDNUNG ZUM ÜBERTRAGEN VON MEDIENDATEN MIT UNTERSCHIEDLICHEN MEDIENTYPEN ÜBER EIN DIENSTGÜTESENSITIVES NETZWERK**
METHOD, COMPUTER PROGRAM PRODUCT, DATA STORAGE MEDIUM AND TELECOMMUNICATIONS ARRANGEMENT FOR TRANSFERRING MEDIA DATA HAVING DIFFERING MEDIA TYPES VIA A NETWORK SENSITIVE TO QUALITY OF SERVICE
PROCÉDÉ, PROGRAMME INFORMATIQUE, PRODUIT DE PROGRAMME INFORMATIQUE ET DISPOSITIF DE TÉLÉCOMMUNICATION DESTINÉS À TRANSMETTRE DES DONNÉES DE MÉDIAS COMPRENANT DIFFÉRENTS TYPES DE MÉDIAS PAR L'INTERMÉDIAIRE D'UN RÉSEAU SENSIBLE À LA QUALITÉ DU SERVICE

(30) Priorität: 10.12.2013 DE 102013021157
(43) Veröffentlichungstag der Anmeldung: 15.06.2016
(73) Patentinhaber: Unify GmbH & Co. KG, 80807 München (DE)
(72) Erfinder: KLAGHOFER, Karl, 81373 München (DE); TOTZKE, Jürgen, 85586 Poing (DE); TIETSCH, Michael, 86916 Kaufering (DE)
(74) Vertreter: Fritzsche, Thomas
(86) Internationale Anmeldenummer: PCT/EP2014/003201
(87) Internationale Veröffentlichungsnummer: WO 2015/086122

(56) Entgegenhaltungen:
- WO-A2-2008/021182
- US-A1- 2008 107 119

## Beschreibung

Echtzeitkommunikation für VoIP (Voice over Internet Protocol) oder Video over IP bildet ein Netzwerk-Overlay über bestehende IP-Netzinfrastrukturen. Echtzeitkommunikation ist sensitiv für Paketverluste und Paketübermittlungsverzögerungen (insbesondere Packet Loss, Delay, Jitter) und kann deshalb die Benutzererfahrung (Quality-of-Experience - QoE) beeinträchtigen.

In IP-Netzen mit "klassischer L2/L3-QoS-Unterstützung" werden Verkehrsklassen (QoS, Quality of Service) unterschieden und auf den Übermittlungsschichten 2 (Layer 2, L2) und 3 (Layer 3, L3) markiert. Diese Markierung ermöglicht es den Netzkomponenten in L2/L3-QoS-unterstützenden Netzwerken, in der Erfindung als dienstgütesensitive Netzwerke genannt, unterschiedliche Prioritäten bei der Weiterleitung anzuwenden (Per-hop Behaviour - PHB) (IEEE802.1p/ DiffServ). Die Anwendung des PHB erfolgt paketweise auf Basis der genannten Markierungen. Die Vergabe dieser Markierungen kann entweder im Medienendpunkt selbst (intern) erfolgen oder extern mittels erkanntem (Medien-)Datenfluss durch ein Netzelement vorgenommen werden. Jedem solcher (Medien-)Datenflüsse (Flows) wurde bisher je eine eigene Portnummer zugeteilt, weshalb hier Eindeutigkeit geherrscht hat. Der Begriff "dienstgütesensitiv" bedeutet dabei, dass ein PHB pro Paket und in jedem Knoten ausgeführt wird, und ist auch als "QoS-aware" bekannt. Die Datenflüsse für Audio- und Videodaten bestehen typischerweise aus einer Folge von IP/UDP-Paketen, die eine Folge von Real-Time Protokoll (RTP)-Protokollelementen als Nutzdaten beinhalten.

Eine Mischung von Verkehrsarten wie Audio, Video, Screen-Sharing, Daten oder auch Gaming über denselben Port oder gar innerhalb desselben Flows ist zwar protokolltechnisch möglich, wurde aber bislang nicht verwendet und wird folglich von den Switches (L2) und Routern (L3) bis dato nicht unterstützt.

Hierbei gilt es zwei Fälle zu unterscheiden:
1. Verschiedene Flows gleichen Medientyps teilen sich dieselbe Portnummer (Port-Multiplexing);
   Vorteile: Verwaltungsaufwand in den Servern und an den Netzübergängen bzgl. der Ports wird reduziert.
2. Verschiedene Medientypen als Servicekomponenten werden in ein und demselben IP-Paket übertragen (Service-Multiplexing innerhalb der IP-Pakete, zusätzlich zu Port-Multiplexing);
   Vorteile: Zusätzlich zu 1. ergibt sich eine weitere Reduzierung des Portverwaltungsaufwandes und ein reduzierter Bandbreitenbedarf, da nur ein IP-Header für mehrere RTP-Protokollelemente benötigt wird (geringerer Protokoll-Overhead).
   In beiden Fällen geht die eingangs erwähnte Eindeutigkeit der Zuordenbarkeit von Port zu Servicekomponente bzw. Medientyp verloren.
   Im 1. Fall funktioniert zwar der beschriebene Weg der internen Markierung und Auswertung auf den Ebenen L2 und L3 noch, die Möglichkeit der externen Markierung auf Grund der Portnummer entfällt jedoch.

Im 2. Fall greift auch die klassische Technik mit den Markierungen nicht mehr, da ein IP-Paket nur eine Markierung tragen kann, sich innerhalb eines IP-Pakets aber Anteile verschiedener Flows und unterschiedlicher Medientypen befinden (können), die meist verschiedene Markierungswerte benötigen.

Die Übermittlung von Mediendaten (real time und non-real time) z.B. direkt aus dem Internet/Web-Browsern heraus wie beispielsweise im aktuellen WebRTC (auch als RTCWeb bekannt)-Standardisierungsansatz (z.B. für Firefox, Google Chrome ...) ist eine neue, gerade in der Definition befindliche Technologie.

Die bei der eingangs beschriebenen "klassischen QoS-Unterstützung" gewählte Zuordnung von Port zu Flow führt bei Multimedia-Anwendungen zu einem erhöhten Verwaltungs- und Implementierungsaufwand und stellt gerade bei der Überwindung von NATs (Network Address Translation) und Firewalls und hier speziell im angestrebten Massenmarkt (z.B. Google Cloud Services) eine nicht zu vernachlässigende Hürde dar. Deshalb soll WebRTC von der Verwaltung der individuellen Verbindungen und damit der verschiedenen Portassoziationen entlastet werden, was durch "Port Multiplexing" und/oder "Service-Multiplexing" erreicht werden soll.

Es ist anzunehmen, dass, nachdem die WebRTC-Technologie standardisiert wurde und breite Anwendung findet, auch die L2/L3-Netzwerkelemente mit einer WebRTCkonformen QoS-Behandlung ausgerüstet werden sollen. Dieser Übergang (Migration) wird sich aber erwartungsgemäß über einen sehr langen Zeitraum hinweg erstrecken und nur sukzessive erfolgen. Die Einführung und Durchsetzung der klassischen QoS-Unterstützung war ebenfalls ein Prozess, der sich über viele Jahre hin erstreckt hat und flächendeckend noch längst nicht abgeschlossen ist.

Mit der Einführung von WebRTC (Real-Time Communication (RTC) über das Web) wird sich daher der dringende Bedarf ergeben, eine Übergangs-/Migrationslösung für die bestehende Netzinfrastruktur bereitzustellen.

Derzeit ist dieses Problem bei WebRTC nicht gelöst. Es gibt zwar Arbeiten zu SCTP (Stream Control Transmission Protocol), doch tragen diese Lösungen nicht im hier betrachteten UDP/RTP-Umfeld.

Man kann WebRTC ohne Port-Multiplexing anwenden (wie z.B. bei SIP). Dadurch können jedoch die grundsätzlichen Multiplexing-Vorteile (s.o.) weder serverseitig (z.B. bei cloudbasierten Anordnungen), noch an den Netzübergängen (Firewall/NAT) genutzt werden.

Aus WO2008/021182 A1 ist bekannt, dass jedes einer Mehrzahl von Paketen in einem bestimmten Datenfluss in eine von einer Vielzahl von Quality of Service (QoS) Klassen basierend auf Informationen über jedes Paket klassifiziert wird. Jedes Paket wird dann verarbeitet, adaptiv auf der Basis der QoS-Klasse für jedes Paket. Die Klassifizierung kann in einer Session Description Protocol (SDP) Messaging basierend auf Medieninformationen durchgeführt werden. Die Klassifizierung kann auch durchgeführt werden auf der Grundlage eines Echtzeit-Übertragungsprotokolls (RTP) Nutzlast, eiesn RTP-Headers, eines Transmission Control Protocol (TCP) Headers, ein User Datagram Protocol (UDP) Headers und eines Internet-Protokoll (IP) Headers. Die Pakete können übertragen werden jedes unter Verwendung von multiple System Architecture Evolution (SAE) Funkträgern, von denen jeder verwendet wird, um differenzierte QoS-Anforderungen zu liefern.

US2008/0107119 A1 offenbart ein Verfahren und System zum Gewährleistender QoS zwischen verschiedenen Funknetze, die ein erstes und ein zweites Netzwerk aufweisen. Das erste Netzwerk, betrieben in Diff-Serv-Modus umfasst ein Benutzergerät (UE). Das zweite Netzwerk umfasst einen AAA-Server, einen TTG und einen GGSN. Bei dem Verfahren wird eine Anforderung zur TTG von der UE initialisiert. Ein erster QoS-Parameter wird einem IP-Header durch das UE zugeordnet, eine Authentifizierungsanforderung wird dann an den AAA-Server gesendet. Die erste QoS-Parameter mit wird einem zweiten QoS-Parameter zugeordnet, und eine Create PDP-Context Anforderung mit dem zweiten QoS Parameter wir erzeugt an dem GGSN, um einen PDP-Context und einen GTP-U-Tunnel anzufordern.

Der vorliegenden Erfindung liegt die Aufgabe zugrunde, in einer RTC-Umgebung (derzeit insbesondere WebRTC-Umgebung) Mediendaten mit unterschiedlichen Medientypen effizient und auch über vorhandene dienstgütesensitive Netzwerke übertragen zu können.

Diese Aufgabe wird mit einem computerimplementierten Verfahren gemäß Anspruch 1 sowie einer Telekommunikationsanordnung gemäß Anspruch 9 gelöst. Das erfindungsgemäße Verfahren kann mittels eines ebenfalls zur Erfindung gehörigen Computerprogramms bzw. Computerprogrammprodukts gemäß Anspruch 7 implementiert werden. Auch ein maschinenlesbarer Datenträger gemäß Anspruch 8 mit einem darauf gespeicherten Computerprogrammprodukt gemäß Anspruch 7 ist Gegenstand der vorliegenden Erfindung.

Vorteilhafte Weiterbildungen der Erfindung sind Gegenstand der abhängigen Ansprüche.

Im Folgenden wird für die Beschreibung der Erfindung ohne Beschränkung der Allgemeinheit davon ausgegangen, dass die RTC-Clients als WebRTC-Clients ausgebildet sind. Es können aber auch modifizierte SIP-Clients sein. Erfindungsgemäß kann beim Übertragen von Mediendaten von einem (beispielsweise in einem Netzwerk befindlichen) ersten WebRTC-Client über ein das Real-Time-Protokoll (RTP) verwendendes, dienstgütesensitives Netzwerk zu einem (im gleichen oder in einem zweiten Netzwerk befindlichen) zweiten WebRTC-Client in folgender Weise vorgegangen werden, wobei darauf hinzuweisen ist, dass die Dienstgüte auf unterschiedlichen Verkehrsklassen beruht und die Mediendaten (zumindest) einen ersten Medientyp mit einer ersten Verkehrsklasse und einen zweiten Typ mit einer zweiten Verkehrsklasse beinhalten: Mediendaten mit unterschiedlichen Medientypen einer hier beispielhaft angenommenen ersten Verkehrsklasse und zweiten Verkehrsklasse werden zunächst von dem ersten WebRTC-Client zu sogenannten "zweiten" Paketen gebündelt. Diese Bündelung ist auch als "Service-Multiplexen" bekannt. In anderen Worten können somit UDP/RTP-Pakete (UDP = User Datagram Protocol) mit Inhalten gemischter Serviceklassen (beispielsweise Voice bzw. Sprache einerseits und Video andererseits) in einem IP-Paket vorhanden sein. In jedem dieser zweiten Pakete wird dabei die Verkehrsklasse jedes Medientyps auf Schicht 4 und/oder auf Schicht 5 des RTP-Protokolls markiert. Dies ist eine sogenannte QoS-Markierung. Dadurch können die RTP-Audio- bzw. -Video-Paketinhalte eines einzigen UDP/RTP-Paketes mit jeweils unterschiedlichen QoS-Werten markiert werden. Diese Pakete können dann in Richtung zum zweiten WebRTC-Client hin übertragen werden. Damit die Mediendaten aber über ein dienstgütesensitives erstes Netzwerk, welches die erfindungsgemäßen neuen Markierungen auf Schicht 4 und/oder Schicht 5 des RTP-Protokolls nicht berücksichtigt und auch nicht "versteht", übertragen werden können, müssen diese zweiten Pakete zuvor umgestaltet werden. Das heißt in anderen Worten, dass entweder vor dem Übergang von dem zweiten Netzwerk in das erste Netzwerk oder im Zuge dieses Übergangs die zweiten Pakete unter Verwendung der Markierungen in Schicht 4 und/oder in Schicht 5 des RTP-Protokolls zuerst entbündelt (Entbündelung = Demultiplexen) und neu zu sogenannten "ersten" Paketen gebündelt werden, von denen jedes nur eine einzige der Verkehrsklassen aufweist. Das heißt, dass erste Pakete gebildet werden, die beispielsweise (ggf. abwechselnd) entweder nur Sprachdaten oder nur Videodaten enthalten. Dieses Sortieren oder erneute Multiplexen bzw. Bündeln muss dabei schon erfolgt sein, bevor die ersten Pakete im ersten dienstgütesensitiven Netzwerk übertragen werden können. In anderen Worten bedeutet dies, dass dieser Vorgang noch nach ggf. einem zweiten, nicht dienstgütesensitiven Netzwerk sofort beim Eintritt in das erste Netzwerk oder ggf. in einem dritten dienstgütesensitiven Netzwerk in Senderichtung vor dessen erstem Router erfolgen muss. Anschließend können dann die ersten Pakete über das erste Netzwerk und ggf. weitere Transitnetzwerke zum zweiten WebRTC-Client (der sich beispielsweise in einem dritten Netzwerk befindet) übertragen werden.

Erfindungsgemäß ermöglicht es die Fähigkeit von Routern, die Markierungen in Schicht 4 und/oder Schicht 5 zu verstehen (beispielsweise durch (Deep) Packet Inspection), jedes empfangene UDP/RTP-Paket zu entbündeln, das heißt, mit den jeweiligen Sprachdaten, Videodaten, etc. aufzuteilen und den dafür vorgesehenen separaten Router-Warteschlangen (Queues) zuzuführen. Bevor der Router die Daten dann zum angestrebten Ziel weiterleitet, erfolgt ein erneutes Bündeln bzw. Multiplexen.

Zusammenfassend ist zum erfindungsgemäßen Verfahren festzuhalten, dass durch ein WebRTC-Port-Multiplexen die bekannten Prinzipien von VoIP/Video-over-IP und QoS beibehalten werden können (d. h. es gibt Router-Warteschlangen mit Behandlung der verschiedenen Dienste mit unterschiedlicher Priorität), selbst wenn vom RTC-Client in den gebündelten bzw. gemultiplexten IP/UDP-Paketen Nutzdaten unterschiedlicher Service-Arten (beispielsweise Voice, Video) enthalten sind. Hiermit wird vermieden, dass Sprach-Router-Warteschlangen beispielsweise mit Videodaten verstopft werden. Daher werden andere Sprachverbindungen in der Router-Warteschlange nicht mehr negativ beeinflusst.

Es ist zu betonen, dass das vorstehend beschriebene Verfahren prinzipiell z.B. unter IPv4, IPv6 (Internet Protocol version 4 bzw. version 6) eingesetzt werden kann.

Eine Variante des vorstehend beschriebenen Verfahrens besteht darin, dass ein Router das Entbündeln übernimmt. Gemäß einer anderen Variante kann anstatt eines Routers ein dem Router vorgeschalteter Proxy die Aufgabe des Entbündelns übernehmen.

Eine weitere Variante des vorstehend beschriebenen Verfahrens besteht darin, dass das Entbündeln der zweiten Pakete und das Bündeln zu ersten Paketen in einer Netzübergangseinrichtung (Gateway) von einem nicht-dienstgütesensitiven Netzwerk zu einem dienstgütesensitiven Netzwerk vor oder hinter der Netzwerkgrenze ausgeführt werden kann.

Gemäß einer vorteilhaften Ausführungsform der Erfindung werden die L4/L5-Markierungen bei zweiten Paketen im IPv4-Format mittels einer standardkonformen, generischen Erweiterung des Kopfes des RTP-Protokollelements vorgenommen.

Gemäß einer vorteilhaften Weiterbildung der Erfindung werden die Markierungen bei IPv6 mittels Erweiterung des Kopfes der zweiten Pakete vorgenommen, wobei die Erweiterung insbesondere eine Liste der vorkommenden Markierungen umfasst. So bietet sich beispielsweise insbesondere für IPv6 die Definition eines eigenen IPv6-Extension-Headers an, der eine zusammenfassende Liste der QoS-Werte der beinhalteten RTP-Protokollelemente und deren Offset (Inhalt des IP-Paketes) enthält. Für Geräte, die mit den L4/L5-Markierungen arbeiten müssen, bringt das den dynamischen Vorteil, dass diese Werte nicht irgendwo im IP-Paket verstreut (als Bestandteil der darin enthaltenen RTP-Protokollelemente) gesucht werden müssen, sondern dass auf diese Werte in einem besonders dafür ausgezeichneten Teil auf IP-Ebene zugegriffen werden kann. Diese Variante bietet sich somit besonders für eine sehr effiziente und schnelle, beispielsweise auch in Hardware realisierte L4/L5-QoS-Behandlung an. Das Vorsehen eines derartigen Extension-Headers bietet überdies den Vorteil, dass es mithilfe eines ohnehin schon vorhandenen bzw. bekannten Verfahrens der Erweiterung des Kopfes eines Pakets ausgeführt werden kann.

Es kann vorteilhaft sein, wenn Markierungen in den zweiten Paketen, die in Schicht 2 (Verbindungssicherungsschicht, z.B. Ethernet) und/oder in Schicht 3 (Vermittlungsschicht, IP-Header) vorhanden sind und sich auf die jeweilige Verkehrsklasse der in den RTP-Protokollelementen enthaltenen Medientypen beziehen, zu einem Hinweis auf vorhandenen Markierungen in Schicht 4 und/oder in Schicht 5 des RTP-Protokolls geändert werden. Auf dieser Basis können dann die gemultiplexten Mischpakete an einen Proxy gesendet werden, der die Aufteilung in Einzelverbindungen (beispielsweise Voice, Video) übernimmt. Der Proxy leitet dann die ersten Pakete an eine Peer-Entität in der Zieldomäne weiter (z. B. Proxy B). Dazwischenliegende Router sehen damit lediglich einzelne, normale Voice- oder Video-Pakete (oder homogene Flows) innerhalb der virtuellen Verbindungen, die entsprechend ihrer Verkehrsklasse (Voice, Video,...) behandelt bzw. weitergeleitet werden können.

Gemäß einer weiteren vorteilhaften Ausführungsform des erfindungsgemäßen Verfahrens wird bei der Signalisierung ausgehandelt, ob ein Port-Multiplexen und/oder Service-Multiplexen ausgeführt wird. Grundsätzlich erzwingt nämlich z.B. das im Rahmen des WebRTC erweiterte SDP-Offer/Answer-Protokoll nicht das Verwenden von Port-Multiplexen und/oder Service-Multiplexen, was in anderen Worten bedeutet, dass das Port-Multiplexen und/oder Service-Multiplexen auch bei WebRTC optional ist. Eine alternative Lösung der Erfindung besteht somit darin, dass die beiden WebRTC-Endpunkte als Teil der Signalisierung aushandeln, ob ein Port-Multiplexen und/oder Service-Multiplexen ausgeführt werden soll oder nicht. Wenn beispielsweise in einem Netz bekannt ist, dass WebRTC und QoS für das Port-Multiplexen und/oder Service-Multiplexen nicht geeignet sind, kann durch eine solche Signalisierungsaushandlung das Port-Multiplexen unterdrückt werden.

Es kann weiterhin vorteilhaft sein, dass die zweiten Pakete, die erfindungsgemäß in Schicht 4 und/oder Schicht 5 markiert sind, mit einem DSCP-Wert (DSCP = Differentiated Services Codepoint) markiert werden, der dem "schlechtesten" Wert der enthaltenen RTP-Protokollelemente entspricht. Im Beispiel von Audio/Video wäre dies einer von sogenannten Assured Forwarding (AFxx) Codepoints, damit diese Pakete keinesfalls in Konflikt mit reinen Sprachverbindungen geraten können, die standardmäßig dem sogenannten Expedited Forwarding (EF) DSCP-Codepoint zugeordnet sind. Damit können derartige IP-Pakete auch in Netzen mit klassischer QoS-Behandlung mit zumindest minimalen QoS-Eigenschaften transportiert werden, aber trotzdem zumindest nicht die sehr kritischen Sprachverbindungen negativ beeinflussen.

Auch ein das erfindungsgemäße, vorstehend beschriebene Verfahren implementierende Computerprogramm bzw. das Computerprogrammprodukt ist als zur vorliegenden Erfindung gehörig anzusehen, ebenso wie ein maschinenlesbarer Datenträger, auf dem ein derartiges Computerprogramm gespeichert ist.

Die der vorliegenden Erfindung zugrunde liegende Aufgabe wird auch gelöst mit einer Telekommunikationsanordnung gemäß Anspruch 9, die einen (beispielsweise in einem zweiten nicht-dienstgütesensitiven Netzwerk befindlichen) ersten WebRTC-Client, einen zweiten WebRTC-Client (z.B. in einem dritten dienstgütesensitiven Netzwerk) und ein (ggf. mit dem zweiten und dritten Netzwerk verbundenes) dienstgütesensitives erstes Netzwerk (und evtl. weitere Transitnetzwerke) enthält, welches das Real-Time-Protokoll verwendet. In einer einfachen Anordnung können sich beide WebRTC-Clients auch innerhalb eines, zumindest in Teilen dienstgütesensitiven, Netzwerk befinden. Erfindungsgemäß ist eine Markierungseinheit vorgesehen, welche das Verfahren gemäß einem der vorgenannten Ansprüche 1 bis 7 ausführt. Diese Markierungseinheit kann beispielsweise einen Prozessor umfassen, auf dem das o.g. Verfahren ablaufen kann, oder sie kann auch in Hardware gegossen sein.

Mit Vorteil ist die Markierungseinheit einer Netzübergangseinrichtung, mit der ein Übergang vom zweiten Netzwerk zum ersten Netzwerk ermöglicht wird, einem Proxy oder aber einem Router/L3-Switch zugeordnet bzw. in einem derartigen Gerät integriert.

Da das erfindungsgemäße Verfahren und die erfindungsgemäße Telekommunikationsanordnung in engem Zusammenhang zueinander stehen, gelten die in Verbindung mit dem Verfahren beschriebenen Merkmale und Vorteile in analoger Weise auch bei der Telekommunikationsanordnung und umgekehrt, auch wenn dies nicht ausdrücklich angegeben ist.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen:
Fig. 1 schematisch eine erfindungsgemäße Telekommunikationsanordnung gemäß der vorliegenden Erfindung, die zum Ausführen des erfindungsgemäßen Verfahrens geeignet ist und anhand der das erfindungsgemäße Verfahren nachstehend beschrieben werden soll; und
Fig. 2 die Struktur eines MAC-Frames mit IP- und UDP-Paketen sowie den RTP-Protokollelementen.

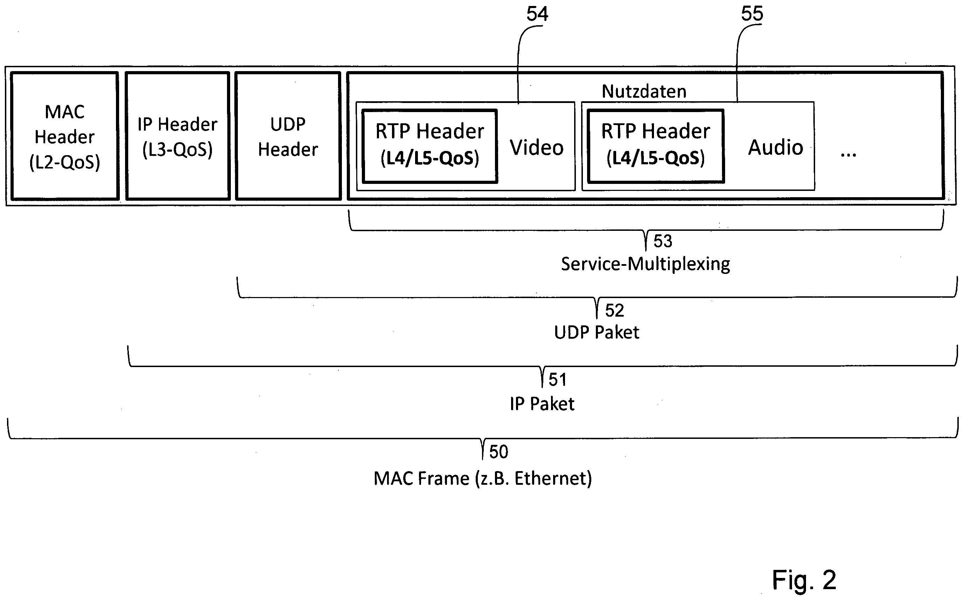

Fig. 2 zeigt einen MAC-Frame 50 (z. B. Ethernet) mit darin eingebettetem IP-Paket 51 und UDP-Paket 52. Der MAC-Frame 50 enthält in seinem MAC-Header die L2-QoS-Markierung. Das IP-Paket 51 enthält in seinem IP-Header die L3-QoS-Markierung. Die UDP-Nutzdaten 53 enthalten mittels Service-Multiplexing die RTP-Protokollelemente 54 und 55 (wie beispielhaft an den Services "Video" 54 und "Audio" 55 dargestellt). Der Header jedes der RTP-Protokollelemente trägt erfindungsgemäß die L4/L5-QoS-Markierung, wie später ausführlich erläutert wird.

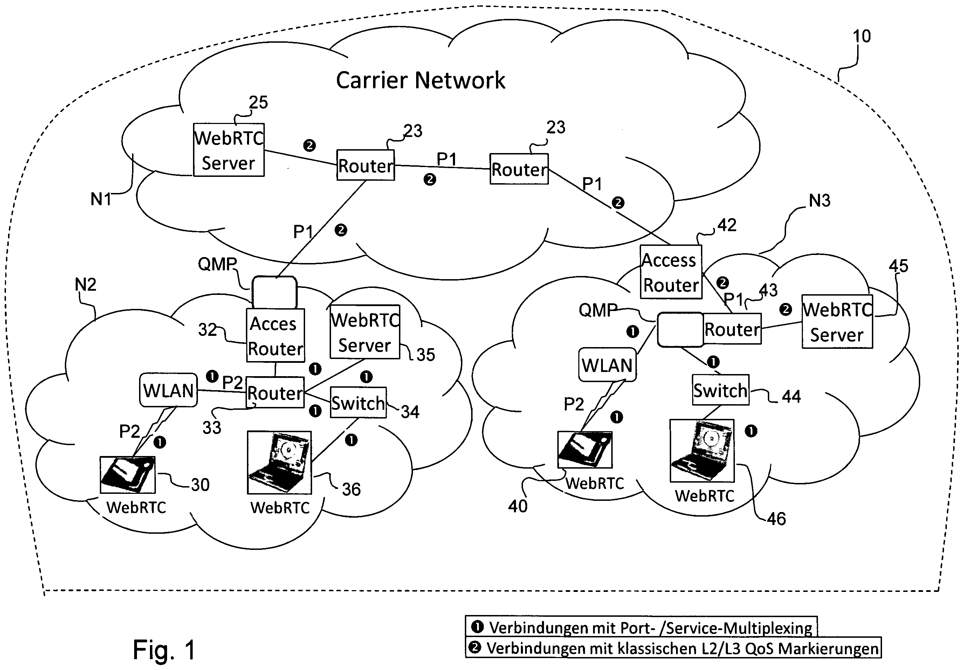

Fig. 1 zeigt schematisch eine erfindungsgemäße Telekommunikationsanordnung gemäß der vorliegenden Erfindung, die zum Ausführen des erfindungsgemäßen Verfahrens geeignet ist und anhand der das erfindungsgemäße Verfahren nachstehend beschrieben werden soll.

Die erfindungsgemäße, schematisch dargestellte Telekommunikationsanordnung 10 umfasst - verallgemeinert, jedoch nicht beschränkend -drei Netzwerke. In einem ersten Netzwerk N1 sind hier als Beispiel ein WebRTC-Server 25 und zwei Router 23 dargestellt, die über dienstgütesensitive (auf unterschiedlichen Verkehrsklassen beruhende) Verbindungen untereinander in Kontakt stehen. Somit ist das gesamte Netzwerk N1 ein dienstgütesensitives Netzwerk. Außerdem ist ein Netzwerk N2 vorgesehen, bei dem ein Access-Router 32, ein "normaler" Router 33, ein Switch 34, ein WebRTC-Server 35, ein Notebook, auf dem ein WebRTC-Browser 36 läuft, und ein Notepad, auf dem ein WebRTC-Browser 30 läuft, vorgesehen sind. Der WebRTC-Browser 30 soll hier als Beispiel für einen WebRTC-Client dienen, der Mediendaten mit unterschiedlichen Verkehrsklassen QoS1 und QoS2 verschicken möchte. Der WebRTC-Client 30 ist über WLAN mit dem Router 33 verbunden, der wiederum mit dem Access-Router 32 verbunden ist. Alle diese Verbindungen sollen in beispielhafter Weise nicht dienstgütesensitiv sein. Dem Access-Router 32 ist eine Markierungseinheit QMP zugeordnet, deren Funktion später beschrieben wird.

Die erfindungsgemäße Telekommunikationsanordnung 10 umfasst außerdem in diesem Beispiel ein drittes Netzwerk N3, das umfasst: einen Access-Router 42 (der als Netzübergangseinrichtung dient), einen Router 43, einen Switch 44, einen WebRTC-Server 45, ein Notebook, auf dem ein WebRTC-Browser 46 läuft, und ein Notepad, auf dem ein WebRTC-Browser 40 läuft. Der WebRTC-Browser 40 soll hier als Beispiel für einen zweiten WebRTC-Client dienen. Anders als beim Netzwerk N2 ist im Netzwerk N3 eine Markierungseinheit QMP dem Router 43 zugeordnet. Während die Verbindungen zwischen dem Router 43 und dem Access-Router 42 sowie zum WebRTC-Server 45 "klassische" dienstgütersensitive Verbindungen sind, sind die übrigen Verbindungen solche mit Port-/Service-Multiplexing (wie die Verbindungen im Netzwerk N2).

Es soll nun angenommen werden, dass der erste WebRTC-Client 30 Sprachdaten mit einem QoS-Wert QoS1 sowie Videodaten mit einem QoS-Wert QoS2 an den zweiten WebRTC-Client 40 übermitteln will und hierfür die Dienste des dienstgütesensitiven Netzwerks N1 in Anspruch nehmen möchte. Hierzu packt der erste WebRTC-Client 30 die unterschiedlichen Daten je nach Anfall in mehrere zweite Pakete P2, was auch als Bündeln oder Multiplexen bezeichnet werden kann. Für jede verwendete Verkehrsklasse (wobei auch mehr als die zwei vorgenannten Verkehrsklassen vorhanden sein können) setzt der erste WebRTC-Client 30 eine entsprechende Markierung in Schicht 4 und/oder in Schicht 5 des Real-Time-Protokolls. Diese Pakete P2 werden an den Router 33 übermittelt und von diesem an den Access-Router 32 weitergeleitet. Dem Access-Router 32, von dem angenommen werden kann, dass er die Hinweise im Paketkopf und/oder die Markierungen in der Erweiterung eines IPv6-Paketes oder die Erweiterungen der Schicht4/Schicht5-Markierungen innerhalb der Köpfe der RTP-Protokollelemente interpretieren kann, ist eine Markierungseinheit QMP zugeordnet, welche die gemischten Datenpakete P2 entbündelt bzw. demultiplext und neue erste Pakete P1 bildet, die "sortenrein" sind, also nur RTP-Protokollelemente einer einzigen QoS-Verkehrsklasse aufweisen. Derartige erste Pakete P1 können dann vom Netzwerk N1, sobald sie vom Access-Router 32 an dieses übergeben und beispielsweise an die Router 23 weitergeleitet worden sind, übertragen werden. An den jeweiligen Verbindungen zwischen einzelnen Geräten ist angegeben, welche Art von Paketen - Pakete P1 oder Pakete P2 - transportiert werden. Die Pakete P1 werden dann an den Access-Router 42 im Netzwerk N3 übermittelt, und vom Access-Router 42 an den Router 43. Dem Router 43 ist ebenfalls eine Markierungseinheit QMP zugeordnet, die die Datenpakete P1 entbündelt und die ursprünglich vorhandenen Datenpakete 2 wieder rekonstruiert, indem sie das Eintreffen einer bestimmten Anzahl an Paketen P1 abwartet und aus diesen die entsprechenden Mediendaten mit unterschiedlichen Medientypen wieder zu einem neuen zweiten Datenpaket P2 kombiniert bzw. bündelt. Diese neuen Datenpakete P2 werden dann an den zweiten WebRTC-Client 40 übertragen.

In dem erfindungsgemäß ausgebildeten Zielrouter 43 erwartet dieser somit die sortierten UDP/IP-Pakete P1 entsprechend einem vordefinierten gleitenden Fenster entsprechend einem IP-Paketzähler, da es durch die im Netzwerk N1 für den Transit der Pakete P1 unterschiedlich angewendeten PHBs durchaus zu Paketüberholungen gekommen sein kann. Innerhalb der Fenster empfangene UDP/IP-Pakete werden entsprechend dem RTP-Segmentzähler wie ursprünglich empfangen rekonstruiert, und der standardisierte oder im Netzwerk N3 gültige DSCP-Codepoint für Dienste-gebündelte RTP/UDP/IP-Pakete wird besetzt, bevor diese zum WebRTC-Client 40 weitergeleitet werden.

In einem heute aktuellen bzw. bekannten dienstgütesensitiven Netzwerk müssen die erfindungsgemäßen Schritte vor dem Routing im Netz erfolgen: Typischerweise geschieht dies in Verbindung mit einem Router, der den Distribution Layer eines Gesamtnetzes verbindet. Ist dagegen nur das Netzwerk N1 dienstgütesensitiv, würde dies in Verbindung mit einem entsprechenden Access-Router erfolgen. Dabei kann die erfindungsgemäße Funktionalität der Markierung in den Schichten 4 und/oder 5 an einer der beiden Seiten des Netzwerkübergangs erbracht werden.

RTP-Protokollelemente gemäß RFC3550 erlauben die Verwendung einer RTP-Header Extension. Das Vorhandensein wird im RTP-Header angezeigt. Die RTP-Header Extension beinhaltet eine Profilkennzeichnung, die erfindungsgemäß festgelegt werden muss. Die Längenangabe sollte mit mindestens eins das Vorhandensein eines DSCP-Codepoints (8 Bits) des jeweiligen Mediatyps und optional eines kombinierten IP-Paket-/RTP-Protokollelementzählers im folgenden 32-Bit-Wort anzeigen. In den verbleibenden 24 Bit können die IP-Paketzähler und RTP-Protokollelementzähler (mit Überlauf) codiert werden, die eine optionale Wiederherstellung der ursprünglichen zweiten Pakete vor der Lieferung an den zweiten WebRTC-Client ermöglichen. Eine erfindungsgemäße Markierungseinheit (die beispielsweise einem Router oder Proxy zugeordnet ist), die das Ursprungs-Distributionsnetzsegment terminiert und einen RTP/UDP/IP-Datenfluss mit Service-Multiplexing identifiziert hat, segmentiert nun die einzelnen RTP-Segmente, zählt und überschreibt die laufende IP-Paketnummer und die Position des RTP-Protokollelementes innerhalb des UPD/IP-Paketes in der RTP-Header Extension. Vorteilhaft sammelt der Router die RTP-Protokollelemente mit gleichem DSCP-Codepoint in ein rekombiniertes RTP/UDP/IP-Paket auf und überschreibt den DSCP-Codepoint des UDP/IP-Headers entsprechend der RTP Header-Extension, bevor das Paket weitergeleitet wird.

Bei der vorstehenden Beschreibung einer beispielhaften Ausführungsform der Erfindung wurde davon ausgegangen, dass nur ein dienstgütesensitives Netzwerk N1 zur Verfügung steht, um die Mediendaten vom ersten WebRTC-Client (eines nicht-dienstgütesensitiven Netzwerkes N2) zum zweiten WebRTC-Client (eines dienstgütesensitiven Netzwerkes N3) zu übermitteln. Dies entspricht einer für die Beschreibung gewählten, schematischen Netzkonfiguration. Auch das Netz N3 in der in Fig. 1 gezeigten Konfiguration ist für die Ausführung des erfindungsgemäßen Verfahrens geeignet.

Es ist festzuhalten, dass die unter Bezug auf die dargestellten Ausführungsformen beschriebenen Merkmale der Erfindung, wie beispielsweise die Art und Ausgestaltung der einzelnen Geräte bzw. Einrichtungen sowie der einzelnen Verfahrensschritte und deren Reihenfolge, auch bei anderen Ausführungsformen vorhanden sein können, außer wenn es anders angegeben ist oder sich aus technischen Gründen von selbst verbietet.

### Bezugszeichenliste

10 = Telekommunikationsanordnung
23 = Router
25 = WebRTC-Server
30 = erster WebRTC-Client
32 = Access-Router/Netzübergangseinrichtung
33 = Router
34 = Switch
35 = WebRTC-Server
36 = WebRTC-Browser
40 = zweiter WebRTC-Client
42 = Access-Router/Netzübergangseinrichtung
43 = Router
44 = Switch
45 = WebRTC-Server
46 = WebRTC-Browser
50 = MAC-Frame
51 = IP-Paket
52 = UDP-Paket
53 = Nutzdaten
54 = Videodaten
55 = Audiodaten
90 = Datenträger
92 = Compterprogrammprodukt
N1 = dienstgütesensitives Netzwerk für Übertragung
N2 = zweites Netzwerk
N3 = drittes Netzwerk
QMP = Markierungseinheit
QoS = Verkehrsklasse (Quality of Service)

## Patentansprüche

1. Computerimplementiertes Verfahren zum Übertragen von Mediendaten von einem ersten RTC-Client (30) über ein das Real-Time-Protocol, RTP, verwendendes, dienstgütesensitives Netzwerk (N1) zu einem zweiten RTC-Client (40), wobei die Dienstgüte auf unterschiedlichen Verkehrsklassen beruht und die Mediendaten einen ersten Medientyp mit einer ersten Verkehrsklasse, QoS1, und einen zweiten Medientyp mit einer zweiten Verkehrsklasse, QoS2, enthalten, umfassend folgende Schritte:
- Mediendaten, die den ersten Medientyp mit der ersten Verkehrsklasse ,QoS1, und den zweiten Medientyp mit der zweiten Verkehrsklasse, QoS2, enthalten, werden von dem ersten RTC-Client (30) zu zweiten Paketen (P2) gebündelt,
- in jedem der zweiten Pakete (P2) wird die Verkehrsklasse, , QoS1, QoS2, jedes Medientyps in Schicht 4 und/oder in Schicht 5 des Real-Time-Protokolls, RTP, markiert,
- die zweiten Pakete (P2) werden in Richtung zum zweiten RTC-Client (40) übertragen,
- bei oder vor dem Übergang in das Netzwerk (N1) werden die zweiten Pakete (P2) unter Verwendung der Markierungen in Schicht 4 und/oder in Schicht 5 des Real-Time-Protokolls, RTP, entbündelt und zu ersten Paketen (P1) gebündelt, von denen jedes nur eine einzige der Verkehrsklassen, QoS1, QoS2, aufweist, und
- die ersten Pakete (P1) werden über das Netzwerk (N1) zum zweiten RTC-Client (40) übertragen.

2. Verfahren nach Anspruch 1,
**dadurch gekennzeichnet, dass** das Entbündeln der zweiten Pakete (P2) und das Bündeln zu ersten Paketen (P1) in einer Netzübergangseinrichtung (32, 42) ausgeführt wird.

3. Verfahren nach Anspruch 1 oder 2,
**dadurch gekennzeichnet, dass** die zweiten Pakete (P2) RTP-Protokollelemente enthalten und die Markierungen mittels Erweiterung des Kopfes der RTP-Protokollelemente der zweiten Pakete (P2) vorgenommen werden, wobei vorzugsweise in der Erweiterung des Kopfes eine Liste der vorkommenden Markierungen erstellt wird.

4. Verfahren nach einem der vorhergehenden Ansprüche,
**dadurch gekennzeichnet, dass** Markierungen in den zweiten Paketen (P2) in Schicht 2 und/oder in Schicht 3 des Real-Time-Protokolls, RTP, die sich auf die jeweilige Verkehrsklasse, QoS1, QoS2, der enthaltenen Medientypen beziehen, zu einer Referenz auf die in Schicht 4 und/oder in Schicht 5 des Real-Time-Protokolls, RTP, vorhandenen Markierungen geändert werden.

5. Verfahren nach einem der vorhergehenden Ansprüche,
**dadurch gekennzeichnet, dass** die zweiten Pakete (P2) mit einem DSCP-Wert markiert werden, der dem schlechtesten Wert der enthaltenen Medientypen entspricht.

6. Verfahren nach einem der vorhergehenden Ansprüche,
**dadurch gekennzeichnet, dass** bei der Signalisierung ausgehandelt wird, ob ein Port-Multiplexen und/oder Service-Multiplexen ausgeführt wird.

7. Computerprogrammprodukt (92) zur Durchführung des Verfahrens gemäß einem der vorhergehenden Ansprüche.

8. Maschinenlesbarer Datenträger (90) mit darauf gespeichertem Computerprogrammprodukt (92) gemäß Anspruch 7.

9. Telekommunikationsanordnung (10) zum Übertragen von Mediendaten von einem ersten RTC-Client (30) über ein das Real-Time-Protokoll, RTP, verwendendes, dienstgütesensitives Netzwerk (N1) zu einem zweiten RTC-Client (40) ausgebildet zum Ausführen des Verfahrens gemäß einem der Ansprüche 1 bis 6, wobei die Dienstgüte auf unterschiedlichen Verkehrsklassen beruht und die Mediendaten einen ersten Medientyp mit einer ersten Verkehrsklasse, QoS1, und einen zweiten Medientyp mit einer zweiten Verkehrsklasse, , QoS2, enthalten, umfassend:
- den ersten RTC-Client (30), dazu ausgebildet, Mediendaten, die den ersten Medientyp mit der ersten Verkehrsklasse, QoS1, und den zweiten Medientyp mit der zweiten Verkehrsklasse, QoS2, enthalten, zu zweiten Paketen (P2) zu bündeln und in Richtung zum zweiten RTC-Client (40) zu übertragen,
- den zweiten RTC-Client (40),
- das das Real-Time-Protokoll, RTP, verwendende, dienstgütesensitive Netzwerk (N1) ausgebildet zur Verbindung des ersten RTC-Clients (30) und des zweiten RTC-Clients (40), und
- eine Markierungseinheit (QMP), dazu ausgebildet, durch die bei oder vor dem Übergang in das Netzwerk (N1) die zweiten Pakete (P2) unter Verwendung der Markierungen in Schicht 4 und/oder in Schicht 5 des Real-Time-Protokolls, RTP, zu entbündeln und zu ersten Paketen (P1) zu bündeln, von denen jedes nur eine einzige der Verkehrsklassen, QoS1, QoS2, aufweist.

10. Telekommunikationsanordnung (10) nach Anspruch 9,
**dadurch gekennzeichnet, dass** die Markierungseinheit (QMP) einer Netzübergangseinrichtung (32, 42), einem Router oder einem Proxy zugeordnet ist.

## Claims

1. A computer-implemented method for transferring media data from a first RTC client (30) to a second RTC client (40) via a network (N1), which uses the Real Time Protocol, RTP, and is sensitive to quality of service, wherein the quality of service is based on different traffic classes, and the media data contain a first media type having a first traffic class, QoS1, and second media type having a second traffic class, QoS2, comprising the following steps:
- media data which contain the first media type having the first traffic class, QoS1, and the second media type having the second traffic class, QoS2, are bundled by the first RTC client (30) into second packets (P2),
- in each of the second packets (P2), the traffic class, QoS1, QoS2, of each media type is marked in layer 4 and/or in layer 5 of the Real Time Protocol (RTP),
- the second packets (P2) are transferred in the direction of the second RTC client (40),
- at or before the transfer to the network (N1), the second packets (P2) are unbundled using the markings in layer 4 and/or in layer 5 of the Real Time Protocol, RTP, and bundled into first packets (P1), each of which has only one of the traffic classes, QoS1, QoS2, and
- the first packets (P1) are transferred to the second RTC client (40) via the network (N1).

2. The method according to claim 1, **characterized in that** the unbundling of the second packets (P2) and the bundling into first packets (P1) is carried out in a network gateway device (32, 42).

3. The method according to claim 1 or 2, **characterized in that** the second packets (P2) contain RTP protocol elements and the markings are made by expanding the header of the RTP protocol elements of the second packets (P2), the expansion of the header involving a listing of the occurring markings.

4. The method according to any of the preceding claims, **characterized in that** markings in the second packets (P2) in layer 2 and/or in layer 3 of the Real Time Protocol, RTP, which refer to the respective traffic classes, QoS1, QoS2, of the media types contained therein, are changed to a reference to the markings occurring in layer 4 and/or in layer 5 of the Real Time Protocol, RTP.

5. The method according to any of the preceding claims, **characterized in that** the second packets (P2) are marked with a DSCP value corresponding to the poorest value of the media types contained therein.

6. The method according to any of the preceding claims, **characterized in that** during signaling it is negotiated whether port multiplexing and/or service multiplexing will be carried out.

7. A computer program product (92) for carrying out the method according to any of the preceding claims.

8. A machine-readable data carrier (90) on which a computer program product (92) according to claim 7 is stored.

9. A telecommunications arrangement (10) for transferring media data from a first RTC client (30) to a second RTC client (40) via a network (N1), which uses the Real Time Protocol, RTP, and is sensitive to quality of service, designed for carrying out the method according to any of claims 1 to 6, wherein the quality of service is based on different traffic classes and the media data contain a first media type having a first traffic class, QoS1, and a second media type having a second traffic class, QoS2, comprising:
- the first RTC client (30), designed for bundling media data which contain the first media type with the first traffic class, QoS1, and the second media type with the second traffic class, QoS2, into second packets (P2) and transferring these to the second RTC client (40),
- the second RTC client (40),
- the network (N1), which uses the Real Time Protocol, RTP, and is sensitive to quality of service, and is designed for connecting the first RTC client (30) to the second RTC client (40), and
- a marking unit (QMP), with which, at or before the transfer to the network (N1), the second packets (P2) are unbundled using the markings in layer 4 and/or in layer 5 of the Real Time Protocol, RTP, and bundled into first packets (P1), each of which has only one of the traffic classes, QoS1, QoS2.

10. The telecommunications arrangement (10) according to claim 9, **characterized in that** the marking unit (QMP) is assigned to a network gateway unit (32, 42), a router or a proxy.

## Revendications

1. Procédé informatisé pour la transmission de données de médias d'un premier client RTC (30) à un second client RTC (40) par l'intermédiaire d'un réseau (N1) qui est sensible à la qualité du service et qui utilise le protocole en temps réel, RTP, la qualité du service reposant sur différentes classes de trafic et les données de médias contenant un premier type de médias qui présente une première classe de trafic, QoS1, et un second type de médias qui présente une seconde classe de trafic, QoS2, le procédé comprenant les étapes suivantes :
- des données de médias contenant le premier type de médias qui présente la première classe de trafic, QoS1, et le second type de médias qui présente la seconde classe de trafic (QoS2) sont regroupées par le premier client RTC (30) en deuxièmes paquets (P2),
- dans chacun des deuxièmes paquets (P2), la classe de trafic, QoS1, QoS2, de chaque type de média est marquée dans la couche 4 et/ou dans la couche 5 du protocole en temps réel, RTP,
- les deuxièmes paquets (P2) sont transmis en direction du second client RTC (40),
- au moment de la transmission dans le réseau (N1) ou avant cette transmission, les deuxièmes paquets (P2) sont dissociés avec utilisation des marquages dans la couche 4 et/ou dans la couche 5 du protocole en temps réel, RTP, et regroupés en premiers paquets (P1) dont chacun ne présente qu'une seule des classes de trafic, QoS1, QoS2, et
- les premiers paquets (P1) sont transmis au second client RTC (40) par le réseau (N1).

2. Procédé selon la revendication 1,
**caractérisé en ce que** la dissociation des deuxièmes paquets (P2) et le regroupement en premiers paquets (P1) sont exécutés dans une passerelle de réseau (32, 42).

3. Procédé selon la revendication 1 ou 2,
**caractérisé en ce que** les deuxièmes paquets (P2) contiennent des éléments de protocole RTP et les marquages sont effectués par extension de l'en-tête des éléments de protocole RTP des deuxièmes paquets (P2), une liste des marquages existants étant de préférence réalisée dans l'extension de l'en-tête.

4. Procédé selon l'une quelconque des revendications précédentes
**caractérisé en ce que** des marquages des deuxièmes paquets (P2) dans la couche 2 et/ou dans la couche 3 du protocole en temps réel, RTP, se référant à la classe de trafic correspondante, QoS1, QoS2, des types de médias contenus, sont changés en une référence aux marquages présents dans la couche 4 et/ou dans la couche 5 du protocole en temps réel, RTP.

5. Procédé selon l'une quelconque des revendications précédentes
**caractérisé en ce que** les deuxièmes paquets (P2) sont marqués d'une valeur DSCP correspondant à la pire valeur des types de médias contenus.

6. Procédé selon l'une quelconque des revendications précédentes
**caractérisé en ce que** des négociations pour savoir si un multiplexage de ports et/ou un multiplexage de services sera exécuté, sont menées pendant la signalisation.

7. Produit logiciel (92) servant à mettre en oeuvre le procédé selon l'une quelconque des revendications précédentes.

8. Support de données lisible par machine (90) sur lequel est enregistré un produit logiciel (92) selon la revendication 7.

9. Dispositif de télécommunication (10) pour la transmission de données de médias d'un premier client RTC (30) à un second client RTC (40) par l'intermédiaire d'un réseau (N1) qui est sensible à la qualité du service et qui utilise le protocole en temps réel, RTP,
conçu pour exécuter le procédé selon l'une quelconque des revendications 1 à 6, la qualité du service reposant sur différentes classes de trafic et les données de médias contenant un premier type de médias qui présente une première classe de trafic, QoS1, et un second type de médias qui présente une seconde classe de trafic, QoS2, le dispositif comprenant :
- le premier client RTC (30) conçu pour regrouper des données de médias contenant le premier type de médias qui présente la première classe de trafic, QoS1, et le second type de médias qui présente la seconde classe de trafic, QoS2, en deuxièmes paquets (P2) et les transmettre en direction du second client RTC (40),
- le second client RTC (40),
- le réseau (N1) qui est sensible à la qualité du service, qui utilise le protocole en temps réel, RTP, et qui est conçu pour relier le premier client RTC (30) et le second client RTC (40), et
- une unité de marquage (QMP) conçue pour dissocier les deuxièmes paquets (P2) au moment de la transmission dans le réseau (N1) ou avant cette transmission avec utilisation des marquages dans la couche 4 et/ou dans la couche 5 du protocole en temps réel, RTP, et pour les regrouper en premiers paquets (P1) dont chacun ne présente qu'une seule des classes de trafic, QoS1, QoS2.

10. Dispositif de télécommunication (10) selon la revendication 9
**caractérisé en ce que** l'unité de marquage (QMP) est affectée à une passerelle de réseau (32, 42), un routeur ou un proxy.
